# EUROPÄISCHE PATENTSCHRIFT

(11) **EP 1 021 651 B1**
(45) Veröffentlichungstag und Bekanntmachung des Hinweises auf die Patenterteilung: **03.04.2002**
(21) Anmeldenummer: 98947462.2
(22) Anmeldetag: 27.08.1998
(51) Int. Cl.: F02M 35/024, F02M 35/04

(54) **LUFTANSAUGSYSTEM**
AIR INTAKE SYSTEM
SYSTEME D'ADMISSION D'AIR

(30) Priorität: 19.09.1997 DE 19741337
(43) Veröffentlichungstag der Anmeldung: 26.07.2000
(73) Patentinhaber: FILTERWERK MANN & HUMMEL GmbH, 71631 Ludwigsburg (DE)
(72) Erfinder: DIGRUBER, Thomas, A-1040 Wien (AT)
(74) Vertreter: Voth, Gerhard, Dipl.-Ing.
(86) Internationale Anmeldenummer: EP9805436
(87) Internationale Veröffentlichungsnummer: WO9915776

(56) Entgegenhaltungen:
- EP-A- 0 478 895
- DE-A- 2 512 724
- DE-A- 3 821 936
- DE-A- 3 911 153

## Beschreibung

Die Erfindung betrifft ein Luftansaugsystem mit einem Filterelement nach der Gattung des Hauptanspruchs.

Bei einem aus der DE 39 11 153 C2 bekannten Luftansaugsystem wird das Filterelement in eine Kassette eingelegt, welche als separate Schublade in eine entsprechende Ausnehmung eines Filtergehäuses einschiebbar ist. Die Schublade ist keilförmig gestaltet, womit am Ende des Einschiebens eine Dichtwirkung zwischen dem Filterelement und dem Filtergehäuse bewirkt wird.

### Aufgabenstellung

Der Erfindung liegt die Aufgabe zugrunde, ein Luftansaugsystem der eingangs genannten Art so fortzubilden, dass ein einfacher Aufbau mit geringem Raumbedarf möglich ist.

### Vorteile der Erfindung

Das erfindungsgemäße Luftansaugsystem ist in vorteilhafter Weise geeignet, ausgehend von der gattungsgemäßen Art, die gestellte Aufgabe mit den kennzeichnenden Merkmalen des Hauptanspruchs zu lösen.

Das Filtergehäuse weist erfindungsgemäß ein Rohluftgehäuse und ein Reinluftgehäuse auf, wobei das Filterelement quer von der Rohluftseite zur Reinluftseite eines Filtergehäuses durchströmbar ist und in einem Rahmen angeordnet ist, der im montierten Zustand entweder ein Teil des Rohluft- oder des Reinluftgehäuses ist. Das Rohluftgehäuse, der Rahmen und das Reinluftgehäuse werden in vorteilhafter Weise mittels durchgehender Befestigungselemente aneinandermontiert.

Bei einer bevorzugten Ausführungsform weist der Rahmen mit dem Filterelement eine keilförmige Kontur auf, wobei zwischen der Auflage an dem Reinluftgehäuse und dem Rand des Filterelements eine Dichtung gebildet ist. Der Rahmen ist in vorteilhafter Weise in Richtung seiner Keilform zwischen das Rohluftgehäuse und das Reinluftgehäuse einschiebbar, wobei das Reinluftgehäuse zunächst in vorgegebenen Grenzen flexibel über Abstandshalter auf dem Rohluftgehäuse gehalten ist. Nach der Montage ist der Rahmen zwischen das Roh- und Reinluftgehäuse eingespannt.

Gemäß einer Ausführungsform der Erfindung sind in Einschubrichtung vorn am Rahmen Erhöhungen vorhanden, die während des Einschiebens das Reinluftgehäuse vom Filterelement wegdrücken und nach dem Einschieben außerhalb des Reinluftgehäuses zu liegen kommen, so dass das Reinluftgehäuse auf dem Dichtungsrand des Filterelements in vorteilhafter Weise aufliegt.

Weiterhin können vorn am Rahmen in Einschubrichtung offene Ausnehmungen vorhanden sein, in die beim Einschieben die Befestigungselemente auf einfache Weise einführbar sind. Der Rahmen ist bei einem weiteren Ausführungsbeispiel im wesentlichen senkrecht auf das Rohluftgehäuse auflegbar und anschließend wird das Reinluftgehäuse mit den Befestigungselementen auf dem Rahmen und dem

Rohluftgehäuse montiert.

Der Rahmen kann gemäß der obigen Ausführungsform eine keilförmige Kontur aufweisen; bei anderen Ausführungsformen ist jedoch auch eine nichtkeilförmige Kontur einsetzbar. Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Ein Ausführungsbeispiel eines erfindungsgemäßen Luftansaugsystems wird anhand der Zeichnung erläutert. Es zeigen:
Figur 1 eine Draufsicht auf ein unmontiertes Luftansaugsystem und
Figur 2 einen Schnitt durch ein montiertes Luftansaugsystem.

### Beschreibung des Ausführungsbeisplels

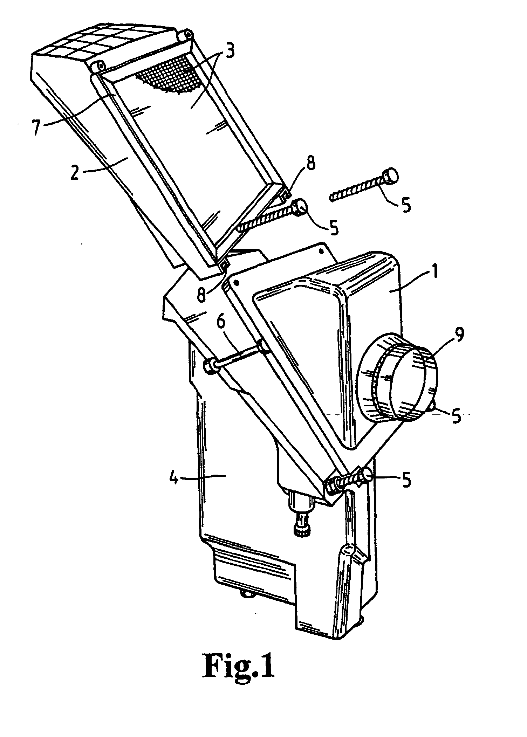

In Figur 1 ist ein Luftansaugsystem gezeigt, das aus einer Haube 1 als Reinluftgehäuse, einem Rahmen 2 für ein Filterelement 3 und einem Rohluftgehäuse 4 besteht. Der am Boden keilförmig gestaltete Rahmen 2 befindet sich nach der Montage zwischen dem Rohluftgehäuse 4 und dem Reinluftgehäuse 1. Der Rahmen 2 enthält einerseits das Filterelement 3 und bildet bei diesem Ausführungsbeispiel gleichzeitig einen Teil des Rohluftgehäuses 4. Bei der Montage werden alle drei Teile aufeinandergesetzt und mit längeren Kunststoffschrauben 5 verschraubt.

In demontiertem Zustand hängt die Haube 1 etwas beweglich an einer Drosselklappenstellerdichtung 9 oder einem hier nicht gezeigtem Reinluftschlauch etc.. Hochgesetzte Abstandshalter 6 verhindern dabei ein Zusammenfallen von der Haube 1 und dem Rohluftgehäuse 4 während eines Filterelementwechsels. Ein Einschieben des Rahmens kann durch Hochheben der Haube 1 unterstützt werden.

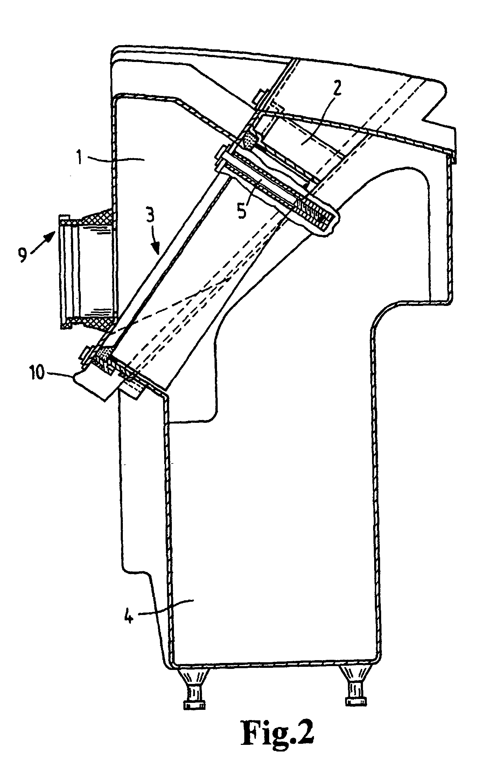

Im letzten Teil des Einschubvorganges kommt es zu einer Berührung zwischen Dichtfläche an der Haube 1 und der Dichtung 7 am Filterelement 3 die in entspanntem Zustand über den Rahmen 2 hinausragt. Um diese Berührung zu vermeiden können am Rahmen 2 Erhöhungen 10 angebracht werden, die aus Figur 2 zu entnehmen sind.

Die Figur 2 zeigt die Anordnung nach Figur 1 mit einem bereits eingeschobenen Rahmen 2. Im letzten Teil des Einschubvorganges wird somit die Haube 1 weggedrückt und daher eine Berührung der Haube 1 mit der Dichtung 7 erst dann zugelassen, wenn sich alle Teile im Einbauzustand befinden.

Das Einschieben des Patronenrahmens 2 dient nur der Vormontage. Durch das Einschieben des hier keilförmigen Rahmens 2 wird keine Dichtkraft erzeugt. Im zweiten Schritt werden die Haube 1, der Patronenrahmen 2 und das Rohluftgehäuse 4 mit den längeren Kunststoffschrauben 5 verschraubt. Der Rahmen 2 wird dabei zwischen der Haube 1 und dem Rohluftgehäuse 4 verspannt und so die erforderliche Dichtkraft aufgebracht.

Am Rahmen 2 werden Ausnehmungen 8, welche an der, der Auszugrichtung abgewandten Seite liegen, nach hinten offen gestaltet, so dass ein Entfernen der Schrauben 5 während des Filterelementwechsels nicht notwendig ist. Ein Filterelementewechsel kann somit leicht vorgenommen werden, wenn wenig Raum für die Demontage der Haube 1 vorhanden ist bzw. die Demontage der Haube gar nicht möglich ist oder aufgrund des beengten Bauraumes das Filterelement schräg zur kunststofftechnischen Entformungsrichtung des Gehäuses gelegt werden muß.

Es kann erfindungsgemäß ein herkömmliches Standardfilterelement verwendet werden, wobei eine Abdichtung in axialer Richtung und damit eine einwandfreie Dichtheit (Funktionssicherheit) und eine einfache Gestaltung der Einschubgeometrie (Funktionssicherheit)-möglich ist. Es kann eine größere Filterfläche gebildet werden, weil der Rahmen 2 gleichzeitig auch eine Außenwand des Rohluftgehäuses 4 bildet. Somit ergibt sich insgesamt eine Erhöhung der Standzeit und der Funktionssicherheit. Es fallen bei der erfindungsgemäßen Anordnung weniger Teile als bei einer reinen Schubladenlösung an, da die Schublade selbst wegfällt. Der Reinluftanschluß muß auch während des Filterelementwechsels nicht gelöst werden, dadurch ergibt sich die erhöhte Dichtheit und Funktionssicherheit.

Es können bei der Montage des Luftansaugsystems einfachere Werkzeuge bei dem schrägliegenden Patronenrahmen 2 durch die Trennung des Rohluftgehäuses in zwei Teile verwendet werden. Ein Hauptvorteil des erfindungsgemäßen Ausführungsbeispiels liegt daher vor allem in der Zweiteilung des Rohluftgehäuses oder ev. auch des Reinluftgehäuses. Wenn der Patronenrahmen 2 schräg zur kunststofftechnischen Entformungsrichtung liegt, so ist durch diese Zweiteilung eine wesentliche Vereinfachung der Herstellungswerkzeuge möglich.

Ein weiterer Unterschied zu der eingangs erwähnten bekannten Lösung besteht in der vereinfachten Montage. Die Dichtkraft wird nicht, wie beim bekannten Schubladenfilter, während des Einschiebens aufgebracht. Das Einschieben des Patronenrahmens 2 ist nur die Vormontage. Die Abdichtung erfolgt erst im zweiten Schritt auf herkömmliche Art durch Verschrauben. Dies gewährleistet eine einwandfreie Dichtheit. Da der Patronenrahmen gleichzeitig die Patrone hält, werden Teile wie Schublade, Kassette eingespart. Weitere Teile, wie Verriegelungselemente für die Schublade oder ein speziell gefertigtes Filterelement entfallen.

## Patentansprüche

1. Luftansaugsystem für einen Verbrennungsmotor, mit
- einem Filterelement (3), das quer von der Rohluftseite zur Reinluftseite eines Filtergehäuses (1,2,4) durchströmbar ist, wobei
- das Filtergehäuse ein Rohluftgehäuse (4) und ein Reinluftgehäuse (1) aufweist,
- das Filterelement (3) in einem Rahmen angeordnet ist, der im montierten Zustand entweder ein Teil des Rohluft- (4) oder des Reinluftgehäuses (1) ist,
**dadurch gekennzeichnet, dass**
- das Rohluftgehäuse (4), der Rahmen (2) und das Reinluftgehäuse (1) mittels durchgehender Befestigungselemente (5) aneinandermontierbar sind.

2. Luftansaugsystem nach Anspruch 1, **dadurch gekennzeichnet, dass**
- der Rahmen (2) mit dem Filterelement (3) eine keilförmige Kontur aufweist, wobei zwischen der Auflage an dem Reinluftgehäuse (1) und dem Rand des Filterelements (3) eine Dichtung (7) gebildet ist.

3. Luftansaugsystem nach Anspruch 1 oder 2, **dadurch gekennzeichnet, dass**
- der Rahmen (2) in Richtung seiner Keilform zwischen das Rohluftgehäuse (4) und dem Reinluftgehäuse (1) einschiebbar ist, wobei das Reinluftgehäuse (1) zunächst in vorgegebenen Grenzen flexibel über Abstandshalter (6) auf dem Rohluftgehäuse (4) gehalten ist und nach der Montage der Rahmen (2) zwischen das Roh- (4) und Reinluftgehäuse (1) eingespannt ist.

4. Luftansaugsystem nach Anspruch 3, **dadurch gekennzeichnet, dass**
- in Einschubrichtung vorn am Rahmen (2) Erhöhungen (10) vorhanden sind, die während des Einschiebens das Reinluftgehäuse (1) vom Filterelement (3) wegdrükken und nach dem Einschieben außerhalb des Reinluftgehäuses (1) zu liegen kommen, so dass das Reinluftgehäuse (1) auf dem Dichtungsrand (7) des Filterelements (3) aufliegt.

5. Luftansaugsystem nach Anspruch 3 oder 4, **dadurch gekennzeichnet, dass**
- vorn am Rahmen (2) in Einschubrichtung offene Ausnehmungen (8) vorhanden sind, in die beim Einschieben die Befestigungselemente (5) einführbar sind.

6. Luftansaugsystem nach Anspruch 1 oder 2, **dadurch gekennzeichnet, dass**
- der Rahmen (2) im wesentlichen senkrecht auf das Rohluftgehäuse (4) auflegbar ist und anschließend das Reinluftgehäuse (1) mit den Befestigungselementen (5) auf dem Rahmen (2) und dem Rohluftgehäuse (4) montierbar ist.

## Claims

1. Air intake system for an internal combustion engine, having
- a filter element (3). through which air can flow transversely from the unfiltered air side to the filtered air side of a filter housing (1, 2, 4), the filter housing having an unfiltered air housing (4) and a filtered air housing (1), the filter element (3) being disposed in a frame, which in the mounted state is either a part of the unfiltered air housing (4) or a part of the filtered air housing (1), **characterised in that** the unfiltered air housing (4), the frame (2) and the filtered air housing (1) can be mounted together by means of securing elements (5) which extend therethrough.

2. Air intake system according to claim 1, **characterised in that** the frame (2) with the filter element (3) has a wedge-shaped configuration, a seal (7) being formed between the support on the filtered air housing (1) and the edge of the filter element (3).

3. Air intake system according to claims 1 or 2, **characterised in that** the frame (2) can be inserted in the direction of its wedge-shape between the unfiltered air housing (4) and the filtered air housing (1), the filtered air housing (1) initially being retained in a resilient manner at a predetermined spacing on the unfiltered air housing (4) via spacer mountings (6) and, after assembly, the frame (2) being clamped between the unfiltered air housing (4) and the filtered air housing (1).

4. Air intake system according *to* claim 3, **characterised in that** at the front of the frame (2) in the direction of insertion there are elevations (10), which press the filtered air housing (1) away from the filter element (3) during the Insertion procedure and come to lie outside the filtered air housing (1) after the insertion procedure, such that the filtered air housing (1) is supported on the sealing edge (7) of the filter element (3).

5. Air intake system according to claims 3 or 4, **characterised in that** at the front of the frame (2) in the direction of insertion there are open recesses (8), into which securing means (5) can be inserted during the Insertion process.

6. Air intake system according to claims 1 or 2, **characterised in that** the frame (2) can be placed onto the unfiltered air housing (4) substantially vertically and the filtered air housing (1) can then be mounted on the frame (2) and the unfiltered air housing (4) with the securing elements (5).

## Revendications

1. Système d'admission d'air pour un moteur à combustion interne, dans lequel :
- un élément filtrant (3) peut être traversé par l'air passant du côté air brut au côté air épuré d'un boîtier de filtre (1, 2, 4)
- le boîtier de filtre comprend un boîtier d'air brut (4) et un boîtier d'air épuré (1), et
- l'élément filtrant (3) est logé dans un cadre qui, à l'état monté, est une partie du boîtier d'air brut (4) ou du boîtier d'air épuré (1)
**caractérisé en ce que**
le boîtier d'air brut (4), le cadre (2) et le boîtier d'air épuré (1) peuvent être assemblés l'un sur l'autre par des éléments de fixation (5) traversants.

2. Système d'admission d'air selon la revendication 1,
**caractérisé en ce que**
le cadre (2) avec l'élément filtrant (3) présente un contour en forme de coin, un joint d'étanchéité (7) étant formé entre la portée d'appui sur le boîtier d'air épuré (1) et le bord de l'élément filtrant (3).

3. Système d'admission d'air selon les revendications 1 ou 2,
**caractérisé en ce que**
le cadre (2) peut être introduit, dans la direction de sa forme en coin, par glissement entre le boîtier d'air brut (4) et le boîtier d'air épuré (1), le boîtier d'air pur (1), flexible dans certaines limites, étant d'abord maintenu par des espaceurs (6) portés par le boîtier à air brut (4), pour être serré entre le boîtier d'air brut (4) et le boîtier d'air épuré (1) après montage du cadre (2).

4. Système d'admission d'air selon la revendication 3,
**caractérisé en ce que**
en avant par rapport à sa direction d'introduction, le cadre (2) porte des parties en relief (10) qui pendant l'introduction de ce cadre maintiennent le boîtier d'air épuré (1) écarté de l'élément filtrant (3), pour l'introduction achevée, venir se placer à l'extérieur du boîtier d'air épuré (1), de sorte que celui-ci est appliqué sur le bord d'étanchéité (7) de l'élément filtrant (3).

5. Système d'admission d'air selon les revendications 3 ou 4,
**caractérisé en ce que**
en avant par rapport à sa direction d'introduction, le cadre (2) présente des évidements ouverts (8) dans lesquels peuvent être passés les éléments de fixation (5).

6. Système d'admission d'air selon les revendications 1 ou 2,
**caractérisé en ce que**
le cadre (2) peut être appliqué à peu près perpendiculairement, sur le boîtier d'air brut (4), puis le boîtier d'air épuré (1) avec les éléments de fixation (5) peut être monté sur le cadre (2) et sur le boîtier d'air brut (4).
